# EUROPEAN PATENT SPECIFICATION

(11) **EP 0 733 081 B1**
(45) Date of publication and mention of the grant of the patent: **17.12.1997**
(21) Application number: 94931013.0
(22) Date of filing: 31.10.1994
(51) Int. Cl.: C08J 9/00, C08J 9/14, C08G 18/38, C08G 18/32

(54) **PROCESS FOR THE PREPARATION OF RIGID POLYURETHANE FOAMS**
VERFAHREN ZUR HERSTELLUNG VON POLYURETHANHARTSCHAUMSTOFFEN
PROCEDE DE PREPARATION DE MOUSSES RIGIDES DE POLYURETHANE

(30) Priority: 30.11.1993 GB 9324511
(43) Date of publication of application: 25.09.1996
(73) Proprietor: IMPERIAL CHEMICAL INDUSTRIES PLC, London SW1P 3JF (GB)
(72) Inventor: DE VOS, Rik, B-3110 Rotselaar (BE); CUNNINGHAM, Anthony, B-3061 Bertem (BE); EECKHAUT, Guy, Julien, Suzanne, B-3001 Heverlee (BE)
(74) Representative: Swinnen, Anne-Marie
(86) International application number: EP9403574
(87) International publication number: WO9515355

(56) References cited:
- EP-A- 0 405 439
- EP-A- 0 498 628
- FR-A- 1 447 850
- US-A- 3 593 437
- US-A- 4 795 763

## Description

This invention relates to processes for the preparation of open celled rigid polyurethane or urethane-modified polyisocyanurate foams, to foams prepared thereby, and to novel compositions useful in said process.

Open celled rigid polyurethane and urethane-modified polyisocyanurate foams are in general prepared by reacting the appropriate polyisocyanate and polyol in the presence of a cell-opening agent. Examples of formulations for making open celled rigid polyurethane foam are described in European patent publications nos 0 498 628 and 0 188 806. One use of such foams is as filler for evacuated insulation panels that can be used for example in the construction of refrigerated storage devices.

An important feature for such an evacuated insulation panel is the pressure level to which the vessel needs to be evacuated in order to reach an acceptable thermal insulation value. Another important feature is the extent of increase in thermal conductivity with increasing internal pressure. Both of these features are dependent for a great deal on the type of filler used in the evacuated insulation panel. Therefore in order to be useful as filler for evacuated insulation panels the open celled rigid polyurethane foam should have a thermal conductivity as low as possible at pressures of between 1 and 10 mbar. Thermal conductivities should be below 10 mW/m K at these pressure levels.
In order to reach such thermal conductivity levels at these reduced pressure levels, open celled rigid polyurethane foams having decreased cell sizes have been used. Whereas conventional polyurethane foams have cell sizes in the range 300 to 500 microns, the open celled polyurethane foams used in evacuated insulation panels usually have cell diameters in the range 50 to 150 micron or even lower (see European patent publications nos 0 188 806 and 0 498 628).

However even for this fine celled open celled rigid polyurethane foam it remains an issue to reduce the thermal conductivity further especially at reduced pressure levels.

It is an object of the present invention to provide fine celled open celled rigid polyurethane or urethane-modified polyisocyanurate foams showing improved thermal insulation properties over the known fine celled open celled rigid polyurethane or urethane-modified polyisocyanurate foams, especially at reduced pressure levels.

The present invention provides a process for the preparation of a fine celled open celled rigid polyurethane or urethane-modified polyisocyanurate foam by reaction of a polyfunctional isocyanate-reactive composition wich a polyisocyanate composition characterised in that the foam-forming composition comprises at least one infrared absorbing compound, uniformly distributed in at least one of the foam-forming ingredients.

By fine celled open celled rigid polyurethane or urethane-modified polyisocyanurate foam as used herein is meant open celled rigid polyurethane or urethane-modified polyisocyanurate foam having cells of average diameter less than 150 micron, preferably less than 120 micron, more preferably less than 100 micron and most preferably less than 50 micron.
The cell size as used herein represents the isotropic diameter of the cell obtainable according to the method described by A. Cunningham in "Proceedings of Conference on Heat in Mass Transfer in Cryoengineering and Refrigeration", September 1986, page 32-49.

By infrared absorbing compound as used herein is meant a compound that absorbs at least 50 % on average electromagnetic radiation in the wavelength range 0 to 50 micron.

By the process of the present invention fine celled open celled rigid polyurethane or urethane-modified polyisocyanurate foams are obtained having substantially improved thermal insulation properties compared to the known fine celled open celled rigid polyurethane or urethane-modified polyisocyanurate foams of the prior art not containing infrared absorbing compounds.

The use of infrared absorbing compounds such as carbon black to improve the thermal insulation of closed celled rigid polyurethane foam is described in US Patent Nos 4,795,763, 5,149,722 and 5,192,607 and Japanese patent publication Kokai No. 57/147510. It is decribed in these publications that the carbon black has to be present in the cell walls in order to obtain an improvement in thermal insulation. It is even mentioned (see US Patent No. 4,149,722) that if the carbon black is clustered at the foam cell struts little or no improvement in thermal insulation is obtained.

Since in open celled foam the cell walls are ruptured and since according to prior art incorporation of carbon black in the cell walls is necessary in order to obtain an improvement in thermal insulation it is surprising that we found an improvement in thermal insulation by incorporating infrared absorbing compounds such as carbon black in open celled fine celled foam.

Especially preferred infrared absorbing compounds for use in the process of the present invention are compounds absorbing on average at least 75 % and more preferably at least 90 % of electromagnetic radiation in the wavelength range 2 to 50 micron, preferably in the wavelength range 5 to 40 micron, most preferably in the wavelength range 6 to 20 micron.

Examples of suitable infrared absorbing compounds for use in the process of the present invention include carbon black, TiO₂, iron oxides such as Fe₂O₃ and Fe₃O₄, CrₓFe₂_ₓ (x = 0.3 to 2), mica, talc, copper, Al₂O₃, Cr₂O₃, Mn₂O₃, MnO₂, ZrO₂, FeTiO₃, MgAl₂O₄, CoAl₂O₄, hydrated oxides such as FeO(OH), aluminum silicate, aluminates such as lithium aluminate, borides such as tungsten boride, borates and perborates such as sodium tetraborate, carbides such as boron carbide, carbonates and bicarbonates such as nickel carbonate, silicides such as zirconium silicide, silicates and mixed silicates with alumina etc. such as kaolin clay, titanates such as nickel titanate, zirconates such as strontium zirconate, stannates such as cerium stannate, nitrates such as aluminium nitrate, cerates such as magnesium hexanitratocerate, phosphides such as iron phosphide, phosphates (meta, ortho and pyro) such as monobasic potassium orthophosphate, arsenates and arsenites such as antimony arsenate, antimonates such as lead antimonate, vanadates such as iron orthovanadate, niobates and niobites such as potassium metaniobite, oxides such as titanium dioxide, hydroxides such as aluminium trihydroxide (gibbsite), chlorides such as zirconyl chloride, sulphates and sulphites such as magnesium sulphate, selenides and selenites such as copper selenite, tellurides such as molybdenum telluride, chromates and dichromates such as lithium dichromate, molybdates such as ammonium paramolybdate, tungstates such as magnesium tungstate, fluorides such as titanium trifluoride, fluoroborates such as zinc tetraborate, fluorosilicate such as magnesium hexafluorosilicate, fluoroantimonates such as ammonium fluoroantimonate, fluorotitanates such as calcium fluorotitanate, fluorozirconates such as indium fluorozirconate, fluorotantalates such as potassium fluorotantalate, chlorides such as magnesium chloride, perchlorates such as gallium perchlorate, bromides such as lanthanum bromide, bromates such as zinc bromate, iodides such as zirconium iodide, manganates and permanganates such as lithium manganate, ferrates such as copper ferrate, metal carbides, metal silicides, metal nitrides, metal nitrates (especially cadmium nitrate), metal borides (especially nickel and its alloys), metal cyanides such as Berlin Blue, metal fibres/flakes such as Al, Mn, Fe, Ni, Pd, Pt, Ag, Au fibres and organic dyestuffs such as ultramarine and (metal) phthalocyanine, Ni bis (dithiolene) complexes, polymethine dyes, heterocyclic cyanine dyes, croconium dyes and minerals of the kaolinite-halloysite series.
Especially preferred infrared absorbing compounds for use in the process of the present invention are carbon black, titanium dioxide and cadmium nitrate.

Preferably the infrared absorbing compound for use in the process of the present invention has particles of asymmetrical shape.
Preferably the particle size of the infrared absorbing compound is between 0.01 and 20 micron, preferably between 0.02 and 3 micron and more preferably between 0.05 and 1 micron.

The carbon black for use as infrared absorbing compound in the process of the present invention may be any of the different kinds available, such as lampblack, channel black, gas furnace black, oil furnace black, thermal black and graphitic carbon black.
Preferred carbon blacks for use in the present process include furnace black SB250, furnace black SB550 and channel black SB4 (all available from Degussa). Especially SB4 is preferred.

In the process of the present invention one of such infrared absorbing compounds may be used or two or more different infrared absorbing substances may be used.

Typically the amount of the infrared absorbing compound used in the process of the present invention ranges from 0.1 to 5 %, preferably from 1 to 3 % and is most preferably about 2 % by weight based on the total foam-forming composition.

A uniform dispersion of the infrared absorbing compound in the finished foam product is essential for the significant improvement of insulation value in accordance with the present invention. To produce the requisite homogeneously filled foam, the infrared absorbing compound is first uniformly distributed in at least one of the foam-forming ingredients such as the polyisocyanate composition or the isocyanate-reactive composition by any conventional dispersing means. There may be added compounds which help to disperse the infrared absorbing compound in the foam-forming ingredients. Further the infrared absorbing compound, for example carbon black, may be surface treated in order to improve the dispersing of the infrared absorbing compound in the foam-forming ingredients.

Suitable organic polyisocyanates for use in the process include any of those known in the art for tne preparation of rigid polyurethane or urethane-modified polyisocyanurate foams, and in particular the aromatic polyisocyanates such as diphenylmethane diisocyanate in the form of its 2,4'-, 2,2'- and 4,4'-isomers and mixtures thereof, the mixtures of diphenylmethane diisocyanates (MDI) and oligomers thereof known in the art as "crude" or polymeric MDI (polymethylene polyphenylene polyisocyanates) having an isocyanate functionality of greater than 2, toluene diisocyanate in the form of its 2,4- and 2,6-isomers and mixtures thereof, 1,5-naphthalene diisocyanate and 1,4-diisocyanatobenzene. Other organic polyisocyanates which may be mentioned include the aliphatic diisocyanates such as isophorone diisocyanate, 1,6-diisocyanatohexane and 4,4'-diisocyanatodicyclohexylmethane.

Polyfunctional isocyanate-reactive compositions for use in the process include any of those known in the art for the preparation of rigid polyurethane or urethane-modified polyisocyanurate foams. Of particular importance for the preparation of rigid foams are polyols and polyol mixtures having average hydroxyl numbers of from 300 to 1000, especially from 300 to 700 mg KOH/g, and hydroxyl functionalities of from 2 to 8, especially from 3 to 8. Suitable polyols have been fully described in the prior art and include reaction products of alkylene oxides, for example ethylene oxide and/or propylene oxide, with initiators containing from 2 to 8 active hydrogen atoms per molecule. Suitable initiators include: polyols, for example glycerol, trimethylolpropane, triethanolamine, pentaerythritol, sorbitol and sucrose; polyamines, for example ethylene diamine, tolylene diamine, diaminodiphenylmethane and polymethylene polyphenylene polyamines; and aminoalcohols, for example ethanolamine and diethanolamine; and mixtures of such initiators. Other suitable polymeric polyols include polyesters obtained by the condensation of appropriate proportions of glycols and higher functionality polyols with dicarboxylic or polycarboxylic acids. Still further suitable polymeric polyols include hydroxyl terminated polythioethers, polyamides, polyesteramides, polycarbonates, polyacetals, polyolefins and polysiloxanes. The quantities of the polyisocyanate compositions and the polyfunctional isocyanate-reactive compositions to be reacted will depend upon the nature of the rigid polyurethane or urethane-modified polyisocyanurate foam to be produced and will be readily determined by those skilled in the art.

In order to obtain fine celled rigid foam an inert, insoluble fluorinated compound may be incorporated into the foam-forming mixture for use in the present process.

The term inert as used herein with reference to the inert, insoluble fluorinated compound used in the process of the invention is to be understood as indicating a substantial lack of chemical reactivity with any of the other components used in the foam-forming reaction.

The term insoluble as used herein with reference to the inert, insoluble fluorinated compound used in the process of the present invention is defined as showing a solubility in either the isocyanate-reactive composition or the polyisocyanate composition with which it is to be blended of less than 500 ppm by weight at 25°C and atmospheric pressure.

Inert, insoluble fluorinated compounds for use in the process of the invention include any of those disclosed in US Patent No. 4,981,879, US Patent No. 5,034,424, US Patent No. 4,972,002, European Patent Applications Nos 0508649 and 0498628.

It is preferred to use an inert, insoluble, substantially fluorinated or perfluorinated compound having a boiling point of at least 20°C at atmospheric pressure, and preferably at least 40°C and more preferably at least 60°C, or 80°C or 100°C.

The term substantially fluorinated as used herein with reference to the inert, insoluble, substantially fluorinated compound used in the process of the invention is to be understood to embrace compounds in which at least 50 % of the hydrogen atoms of the unfluorinated compounds are replaced by fluorine.

Suitable compounds include substantially fluorinated or perfluorinated hydrocarbons, substantially fluorinated or perfluorinated ethers, substantially fluorinated or perfluorinated tertiary amines, substantially fluorinated or perfluorinated amino-ethers and substantially fluorinated or perfluorinated sulphones.

Suitable examples of substantially fluorinated or perfluorinated hydrocarbons are those containing from 1 to 15 carbon atoms, which may be either cyclic or acyclic, either aromatic or aliphatic and either saturated or unsaturated, such as substantially fluorinated and perfluorinated methane, ethane, propane, butane, pentane, hexane, heptane, octane, nonane, decane, cyclobutane, cyclooctane, cyclohexane, cyclopentane, cycloheptane, norbornadiene, decaline, dimethylcyclobutane, methylcyclohexane, 1-methyldecaline, phenanthrene, dimethylcyclobutane, and isomers thereof. Particular mention may be made of the various isomers of perfluoropentane and perfluorohexane such as perfluoro-n-pentane and perfluoro-n-hexane.

Suitable examples of substantially fluorinated or perfluorinated ethers are those containing from 3 to 15 carbon atoms, which may be cyclic or acyclic, such as substantially fluorinated or perfluorinated dialkyl ethers and alkyl substituted cyclic ethers. Particular mention may be made of perfluorinated methyl ethyl ether, perfluorinated methyl propyl ether, the perfluorinated alkyltetrahydropyrans such as perfluorinated propyltetrahydropyran, and the perfluorinated alkyltetrahydrofurans such as perfluorinated propyltetrahydrofuran and perfluorinated butyltetrahydrofuran. Additional examples of substantially fluorinated or perfluorinated ethers which are suitable for use in the process of the invention are the commercially available fluorinated polyethers such as Galden HT 100, HT 200, HT 230, HT 250 and HT 270 from Montefluos SpA (Galden is a Trade Mark).

Suitable examples of substantially fluorinated or perfluorinated amines are tertiary amines containing from 3 to 15 carbon atoms, which may be cyclic or acyclic, such as substantially fluorinated or perfluorinated trialkylamines, N-alkylated cyclic amines, tetraalkylhydrazines and trialkylhydroxylamines. Particular mention may be made of substantially fluorinated or perfluorinated trimethylamine, triethylamine, ethyldimethylamine, methyldiethylamine, tripropylamine, tributylamine, tripentylamine, tetramethylhydrazine, trimethylhydroxylamine, O-ethyl dimethylhydroxylamine,O,O'-bis-(dialkylamino)propylene-glycol,O,O'-bis-(dialkylamino)ethyleneglycol, N-methylpyrrolidine and the N-alkylpiperidines such as N-methylpiperidine.

Suitable examples of substantially fluorinated or perfluorinated aminoethers include those having from 3 to 15 carbon atoms, which may be cyclic or acyclic, such as substantially fluorinated or perfluorinated trialkylethanolamines and N-alkylmorpholines. Particular mention may be made of substantially fluorinated or perfluorinated trimethylethanolamines and N-(C₁₋₆-alkyl)morpholines such as N-methyl, N-ethyl and N-isopropylmorpholine.

Suitable examples of substantially fluorinated or perfluorinated sulphones include perfluorinated dialkylsulphones having from 2 to 8 carbon atoms such as perfluoro-(dimethylsulphone) and perfluoro(methyldiethyl-sulphone).

Certain inert, insoluble fluorinated compounds suitable for use in the process of the invention may themselves act as blowing agents under the conditions pertaining to the foam-forming reaction, particularly where their boiling point is lower than the exotherm temperature achieved by the reaction mixture. For the avoidance of doubt, such materials may, partly or completely, fulfil the function of blowing agent in addition to that of inert, insoluble fluorinated compound.

The amount of the inert, insoluble fluorinated compound used in the process of the present invention ranges from 0.05 to 10 %, preferably from 0.1 to 5 %, most preferably from 0.6 to 2.3 % by weight based on the total foam-forming composition.

The inert, insoluble fluorinated compound will usually be incorporated in the foam-forming reaction mixture in the form of an emulsion or preferably a microemulsion in one of the major components, that is to say in the isocyanate-reactive component and/or the polyisocyanate component. Such emulsions or microemulsions may be prepared using conventional techniques and suitable emulsifying agents.

Emulsifying agents suitable for preparing stable emulsions or microemulsions of fluorinated liquid compounds in organic polyisocyanates and/or isocyanate-reactive compounds include surfactants chosen from the group of nonionic, ionic (anionic or cationic) and amphoteric surfactants. Preferred surfactants are fluoro surfactants and/or alkoxylated alkanes. Particular examples of fluoro surfactants include fluorinated alkyl polyoxyethylene ethanols, fluorinated alkyl alkoxylates and fluorinated alkyl esters. Examples of useful fluorinated surfactants which are commercially available are Fluorad FC 430 and FC 431 from 3M, Forafac 1110D, 1157, 1157N and 1199D from Atochem and Fluowet S 3690, OTN and CD from Hoechst.

The amount of emulsifying agent used is between 0.02 and 5 pbw per 100 pbw of foam forming reaction system and between 0.05 and 10 pbw per 100 pbw of polyisocyanate or polyol composition.

The process of the present invention may be carried out in the presence of any of the blowing agents known in the art for the preparation of rigid polyurethane or urethane-modified polyisocyanurate foams. Such blowing agents include water or other carbon dioxide-evolving compounds, or inert low boiling compounds having a boiling point of above -70°C at atmospheric pressure.

In addition to the polyisocyanate and polyfunctional isocyanate-reactive compositions, the infrared absorbing compound, the inert, insoluble fluorinated compound and the blowing agent, the foam-foaming reaction mixture will commonly contain one or more other auxiliaries or additives conventional to formulations for the production of rigid polyurethane and urethane-modified polyisocyanurate foams. Such optional additives include crosslinking agents, for examples low molecular weight polyols such as triethanolamine, foam-stabilising agents or surfactants, for example siloxane-oxyalkylene copolymers, urethane catalysts, for example tin compounds such as stannous octoate or dibutyltin dilaurate or tertiary amines such as dimethylcyclohexylamine or triethylene diamine, and fire retardants, for example halogenated alkyl phosphates such as tris chloropropyl phosphate or alkyl phosphonates.

A particularly preferred embodiment of the present invention involves a process for the preparation of open celled fine celled rigid polyurethane or urethane-modified polyisocyanurate foam comprising the step of reacting an organic polyisocyanate with an isocyanate-reactive material in the presence of an infrared absorbing compound and in the presence of a blowing promotor being an isocyanate-reactive cyclic compound of formula: 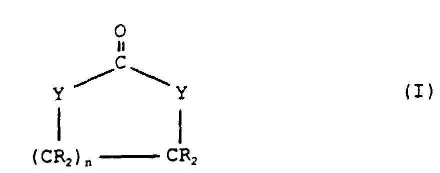 wherein
Y is O or NR¹ wherein each R¹ independently is a lower alkyl radical of C₁-C₆ or a lower alkyl radical substituted with an isocyanate-reactive group;
each R independently is hydrogen, a lower alkyl radical of C₁-C₆ or (CH₂)ₘ-X wherein X is an isocyanate-reactive group which is OH or NH₂ and m is 0, 1 or 2; and
n is 1 or 2;
with the proviso that at least one of R¹ or R is or comprises an isocyanate-reactive group;
and in the presence of an inert, insoluble fluorinated compound which is present as the dispersed phase of an emulsion or a microemulsion and in the presence of a metal salt catalyst.

A preferred compound of formula (I) wherein Y is O is an isocyanate-reactive cyclic carbonate which is glycerol carbonate.

Preferred compounds of formula (I) wherein Y is NR¹ are isocyanate-reactive cyclic ureas of formula: 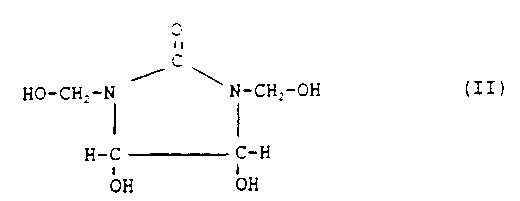 and

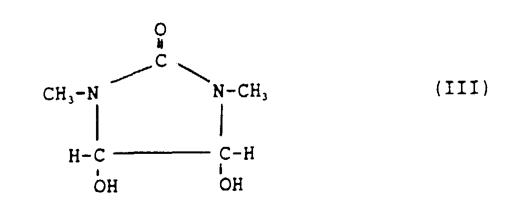

The isocyanate-reactive cyclic blowing promotor is used in amounts ranging from 0.5 to 99 %, preferably from 1 to 60 % by weight based on the total isocyanate-reactive material.

Suitable further blowing agents may be used in the said preferred process of the present invention such as water or inert low boiling compounds having a boiling point of above -50°C at 1 bar.

The amount of water used as blowing agent may be selected in known manner to provide foams of the desired density, typical amounts being in the range from 0.05 to 5 parts by weight per 100 parts by weight of reactive ingredients, although it may be a particular embodiment of the present invention to incorporate up to 10 % by weight or even up to 20 % by weight of water.

Suitable inert blowing agents include, for example, hydrocarbons, dialkyl ethers, alkyl alkanoates, aliphatic and cycloaliphatic hydrofluorocarbons, hydrochlorofluorocarbons, chlorofluorocarbons and fluorine-containing ethers. Suitable hydrocarbon blowing agents include lower aliphatic or cyclic hydrocarbons such as n-pentane, isopentane, cyclopentane, neopentane, hexane and cyclohexane.

Preferred metal salt catalysts for use in the present invention are those selected among group Ia and group IIa metal salts, more preferably among group Ia and group IIa metal carboxylates.

Particularly suitable catalysts for use in the present invention are potassium acetate and potassium ethylhexoate.

The metal salt catalyst is used in the process of the present invention in amounts ranging from 0.01 to 3 % by weight based on the total reaction system.

Apart from the metal salt catalyst some amine catalyst may be used in this process.

In operating the process for making rigid foams according to the invention, the known one-shot, prepolymer or semi-prepolymer techniques may be used together with conventional mixing methods and the rigid foam may be produced in the form of slabstock, mouldings, cavity fillings, sprayed foam, frothed foam or laminates with other materials such as hardboard, plasterboard, plastics, paper or metal.

To reduce the number of component streams delivered to the final mixing apparatus, most of the additives such as the blowing agent, catalyst, fluorinated compound and infrared absorbing compound and optionally others may be premixed with one of the major components of the foam formulation, in general with the isocyanate-reactive component.

Therefore the present invention also provides an isocyanate-reactive composition and/or a polyisocyanate composition for use in the present process comprising an inert, insoluble fluorinated compound and further comprising an infrared absorbing compound dispersed therein.

In a preferred embodiment of the present invention the isocyanate-reactive composition further comprises the blowing promotor of formula (I) as specified above and the metal salt catalyst as specified above.

Especially when the fine celled open celled rigid polyurethane or urethane-modified polyisocyanurate foam is to be used as filler in evacuated insulation panels it may be advantageously for outgassing aspects to incorporate the infrared absorbing compound into the polyisocyanate composition itself, optionally also containing the inert, insoluble fluorinated compound.

Open celled fine celled rigid polyurethane or urethane-modified polyisocyanurate foams prepared according to the process of the present invention are of particular use for evacuated insulation panel applications where they show superior thermal insulation properties.

Evacuated insulation panels generally comprise a low thermal conductivity filler material (such as open celled polyurethane foam) and a vessel formed of a gastight film enveloping said filler, the whole being evacuated to an internal pressure of about 5 mbar or less and then hermetically sealed.

The pressure level to which the vessel must be evacuated in order to obtain a satisfactory insulating property depends on the specific filler material.
Also the extent of increase in thermal conductivity with internal pressure increase with lapse of time (owing i.a. to gases such as air and water vapor diffusing gradually) depends on the type of filler material.

Evacuated insulation panels filled with the fine celled open celled rigid polyurethane foams of the present invention are improved with respect to the thermal insulation value at a certain pressure compared to evacuated insulation panels filled with the known open celled rigid polyurethane foams of the prior art not containing an infrared absorbing substance.

General descriptions of the construction of evacuated insulation panels and their use in thermal devices can be found in US Patents Nos 5,066,437, 5,032,439 and 5,076,984 and European Patent Publications Nos 434266, 434225 and 181778, all incorporated herein by reference as well as the references mentioned therein.

Preferably the fine celled open celled rigid polyurethane foam of the present invention is preconditioned prior to placement in the gastight envelope. This preconditioning involves heating and agitating the filler material preferably under reduced pressure in order to remove contaminants.

To improve the performance of the evacuated insulation panel materials are provided within the sealed panels to absorb or otherwise interact with gases and vapors that remain due to imperfect evacuation, that permeate the enclosure from the outside atmosphere or evolve from the polyurethane foam filler itself. Such materials are known as getters and may include, for example, activated carbon, molecular sieves and zeolites to adsorb volatiles evolving from the polyurethane foam filler. Other suitable getter materials are described in US Patents Nos 4,000,246, 4,444,821, 4,663,551, 4,702,986 and 4,726,974 and in European Patent Publications Nos 434266 and 181778.

The invention is illustrated but not limited by the following examples.

### Example 1 : Preparation of carbon black dispersion

21.6 g Solsperse 20K dispersant (available from Imperial Chemical Industries PLC) dried using rotary vacuum and 60 g toluene dried over a molecular sieve were added to a rotary vacuum flask and mixed at room temperature. 15 g SB4 carbon black (available from Degussa) dried overnight in an oven at 120°C was then added and dispersed using low shear mixing prior to placing in an ultrasonic bath for 30 minutes. A further 15 g of SB4 was then added to the flask and the ultrasonic treatment repeated for 1 hour. 62.5 g of polyol Daltolac XR144 (available from Imperial Chemical Industries) was added to the obtained dispersion and left to rotate on the rotavac at room temperature for 15 minutes. The solvent was then removed under vacuum at oil bath temperatures of 140°C.
The obtained carbon black dispersion (referred to hereinafter as CB 1) contained 55 % by weight of polyol, 26 % by weight of carbon black and 19 % by weight of dispersant.

### Example 2: Foam preparation

The following ingredients were used:
Daltolac XR 159 being a polyether polyol of OH value 500, molecular weight 370 and functionality 3.3 available from Imperial Chemical Industries PLC;
Polyol 1 being a polyether polyol having a functionality of 2, a OH value of 54 and a molecular weight of 2200;
DC 193 being a silicone surfactant available from Dow Corning; Catalyst LB being a metal salt catalyst available from Imperial Chemical Industries PLC;
Fixapret NF being a cyclic urea available from BASF;
perfluoropentane available from 3M;
Suprasec DNR being a polymeric MDI available from Imperial Chemical Industries PLC.

Rigid foams of open cell, fine cell structure and good insulation property were prepared by using the following formulations (amounts are given in parts by weight):

| Polyol composition | | |
|---|---|---|
| Daltolac XR 159 | 70 | 70 |
| Polyol 1 | 30 | 18.5 |
| DC 193 | 4 | 4 |
| Catalyst LB | 1.8 | 1.8 |
| | | |
| Fixapret NF | 1.8 | 1.8 |
| | | |
| perfluoropentane | 9.8 | 9.8 |
| | | |
| carbon black CB1 | - | 11.5 |

| Polyisocyanate composition | | |
|---|---|---|
| Suprasec DNR | 118.15 | 122.2 |

The resulting open celled rigid foams had the following properties.

| | | |
|---|---|---|
| Closed cell content (%) | 0 | 0 |
| Lambda value (mW/m K) | 32.1 | 29.4 |

Closed cell content was measured according to BS 4370 Method 10 standard and represents volume % of closed cells. Lambda value was measured according to ISO 2581 Initial standard at atmospheric pressure.

These results show that by using carbon black in an amount of about 1 % by weight based on the total foam forming formulation open celled rigid foams are obtained showing a relative improvement in thermal conductivity at atmospheric pressure of 8 % over non carbon black containing open celled foams.

The same relative improvement in thermal conductivity will also be found at reduced pressure levels.

## Claims

1. Process for the preparation of a fine celled open celled rigid polyurethane or urethane-modified polyisocyanurate foam having cells of average diameter less than 150 micron comprising the step of reacting an organic polyisocyanate with a polyfunctional isocyanate-reactive material, characterised in that the reaction is carried out in the presence of at least one infrared absorbing substance absorbing at least 50 % of electromagnetic radiation in the wavelength range 2 to 50 micron, uniformly distributed in at least one of the foam-forming ingredients.

2. Process according to claim 1 wherein the infrared absorbing substance is carbon black or titanium dioxide.

3. Process according to any one of the preceding claims wherein the infrared absorbing substance has particles of asymmetrical shape.

4. Process according to any one of the preceding claims wherein the particle size of the infrared absorbing substance is between 0.01 and 20 micron.

5. Process according to any one of the preceding claims wherein the amount of infrared absorbing substance ranges from 0.1 to 5 % by weight based on the total foam-forming composition.

6. Process according to any one of the preceding claims wherein the process is carried out in the presence of an inert, insoluble fluorinated compound, showing a solubility in either the isocyanate-reactive composition or the polyisocyanate composition of less than 500 ppm by weight at 25°C and atmospheric pressure.

7. Process according to claim 6 wherein the inert, insoluble fluorinated compound is selected from the following group: substantially fluorinated or perfluorinated hydrocarbons, substantially fluorinated or perfluorinated ethers, substantially fluorinated or perfluorinated tertiary amines, substantially fluorinated or perfluorinated amino-ethers and substantially fluorinated or perfluorinated sulphones, substantially fluorinated to be understood to embrace compounds in which at least 50 of the hydrogen atoms of the unfluorinated compounds are replaced by fluorine.

8. Process according to claim 7 wherein the inert, insoluble fluorinated compound is perfluoro-n-pentane or perfluorinated butyltetrahydrofuran.

9. Process according to claim 6, 7 or 8 wherein the amount of inert, insoluble fluorinated compound is between 0.1 and 5 % by weight based on the total foam-forming composition.

10. Process according to any one of claims 6 to 10 wherein the process is carried out in the presence of a blowing promotor which is an isocyanate-reactive cyclic compound of formula 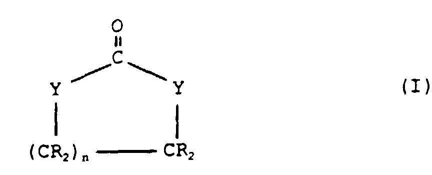 wherein
Y is O or NR¹ wherein each R¹ independently is a lower alkyl radical of C₁-C₆ or a lower alkyl radical substituted with an isocyanate-reactive group;
each R independently is hydrogen, a lower alkyl radical of C₁-C₆ or (CH₂)ₘ-X wherein X is an isocyanate-reactive group which is OH or NH₂ and m is 0, 1 or 2; and
n is 1 or 2;
with the proviso that at least one of R¹ or R is or comprises an isocyanate-reactive group;
and in the presence of a metal salt catalyst.

11. Process according to claim 10 wherein the compound of formula (I) is an isocyanate-reactive cyclic carbonate or an isocyanate-reactive cyclic urea.

12. Process according to any one of claims 10 to 11 wherein the metal salt catalyst is a group Ia or group IIa metal carboxylate.

13. Open celled rigid polyurethane or urethane-modified polyisocyanurate foam obtainable by the process as defined in claims 1 to 12.

14. Use of an Isocyanate-reactive composition comprising an inert, insoluble fluorinated compound showing a solubility in the isocyanate-reactive composition of less than 500 ppm by weight at 25°C and atmospheric pressure and further comprising an infrared absorbing substance absorbing at least 50 % of electromagnetic radiation in the wavelength range 2 to 50 micron, dispersed therein for carrying out the process claimed in claim 1.

15. Use of an isocyanate-reactive composition according to claim 14 further comprising a blowing promotor which is an isocyanate-reactive cyclic compound of formula 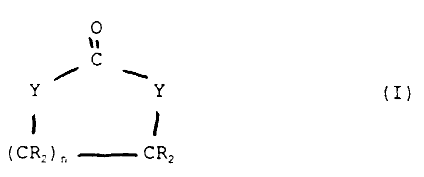 wherein
Y is O or NR¹ wherein each R¹ independently is a lower alkyl radical of C₁-C₆ or a lower alkyl radical substituted with an isocyanate-reactive group;
each R independently is hydrogen, a lower alkyl radical of C₁-C₆ or (CH₂)ₘ-X wherein X is an isocyanate-reactive group which is OH or NH₂ and m is 0, 1 or 2; and n is 1 or 2;
with the proviso that at least one of R¹ or R is or comprises an isocyanate-reactive group;
and a metal salt catalyst.

16. Use of a Polyisocyanate composition comprising an infrared absorbing substance absorbing at least 50 % of electromagnetic radiation in the wavelength range 2 to 50 micron and further comprising an inert, insoluble fluorinated substance showing a solubility in the polyisocyanate composition of less than 500 ppm by weight at 25°C and atmospheric pressure for carrying out the process claimed in claim 1.

17. Evacuated Insulation panel comprising a filler and a gastight vessel enveloping said filler, characterised in that the filler comprises an open celled rigid polyurethane or urethane-modified polyisocyanurate foam as defined in claim 13.

## Patentansprüche

1. Verfahren zur Herstellung eines feinzelligen offenzelligen Polyurethan- oder urethanmodifizierten Polyisocyanurat-Hartschaumstoffs mit Zellen, die einen geringeren durchschnittlichen Durchmesser als 150 µm (Mikron) haben, umfassend den Schritt der Umsetzung eines organischen Polyisocyanats mit einem polyfunktionellen isocyanatreaktiven Material,
**dadurch gekennzeichnet, daß**
die Umsetzung in Gegenwart von mindestens einer im Infrarotbereich absorbierenden Substanz durchgeführt wird, welche mindestens 50% der elektromagnetischen Strahlung im Wellenlängenbereich von 2 bis 50 µm (Mikron) absorbiert und in mindestens einem der schaumstoffbildenden Bestandteile gleichförmig verteilt ist.

2. Verfahren nach Anspruch 1, wobei die im Infrarotbereich absorbierende Substanz Ruß oder Titandioxid ist.

3. Verfahren nach einem der vorhergehenden Ansprüche, wobei die im Infrarotbereich absorbierende Substanz Partikel von asymmetrischer Form hat.

4. Verfahren nach einem der vorhergehenden Ansprüche, wobei die Partikelgröße der im Infrarotbereich absorbierenden Substanz zwischen 0,01 und 20 µm (Mikron) beträgt.

5. Verfahren nach einem der vorhergehenden Ansprüche, wobei die Menge an der im Infrarotbereich absorbierenden Substanz im Bereich von 0,1 und 5 Gew.-% liegt, bezogen auf die gesamte schaumstoffbildende Zusammensetzung.

6. Verfahren nach einem der vorhergehenden Ansprüche, wobei das Verfahren in Gegenwart einer inerten, unlöslichen, fluorierten Verbindung durchgeführt wird, welche in entweder der isocyanatreaktiven Zusammensetzung oder der Polyisocyanat-Zusammensetzung eine Löslichkeit von weniger als 500 ppm an Gewicht bei 25°C und Atmosphärendruck zeigt.

7. Verfahren nach Anspruch 6, wobei die inerte, unlösliche, fluorierte Verbindung aus der folgenden Gruppe ausgewählt ist: im wesentlichen fluorierte oder perfluorierte Kohlenwasserstoffe, im wesentlichen fluorierte oder perfluorierte Ether, im wesentlichen fluorierte oder perfluorierte tertiäre Amine, im wesentlichen fluorierte oder perfluorierte Aminoether und im wesentlichen fluorierte oder perfluorierte Sulfone, wobei "im wesentlichen fluoriert" derart zu verstehen ist, daß Verbindungen umfaßt sind, in denen mindestens 50% der Wasserstoffatome der unfluorierten Verbindungen durch Fluor ersetzt sind.

8. Verfahren nach Anspruch 7, wobei die inerte, unlösliche, fluorierte Verbindung Perfluor-n-pentan oder perfluoriertes Butyltetrahydrofuran ist.

9. Verfahren nach einem der Ansprüche 6, 7 oder 8, wobei die Menge an inerter, unlöslicher, fluorierter Verbindung zwischen 0,1 und 5 Gew.-% beträgt, bezogen auf die gesamte schaumstoffbildende Zusammensetzung.

10. Verfahren nach einem der Ansprüche 6 bis 10, wobei das Verfahren in Gegenwart eines Treibmittelaktivators, welcher eine isocyanatreaktive cyclische Verbindung der Formel 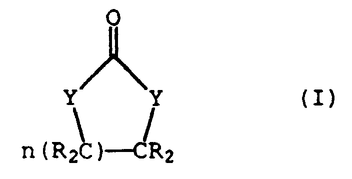 ist,
wobei Y gleich O oder NR² ist, wobei jedes R₂ unabhangig ein niederes C₁-C₆-Alkylradikal oder ein mit einer isocyanatreaktiven Gruppe substituiertes niederes Alkylradikal ist;
jedes R unabhängig Wasserstoff, ein niederes C₁-C₆-Alkylradikal oder (CH₂)ₘ-X ist, wobei X eine isocyanatreaktive Gruppe, welche OH oder NH₂ ist, und m gleich 0, 1 oder 2 ist; und
n gleich 1 oder 2 ist;
mit der Maßgabe, daß mindestens eines von R¹ oder R eine isocyanatreaktive Gruppe ist oder umfaßt;
und in Gegenwart eines Metallsalzkatalysators durchgeführt wird.

11. Verfahren nach Anspruch 10, wobei die Verbindung der Formel (I) ein isocyanatreaktives cyclisches Carbonat oder ein isocyanatreaktiver cyclischer Harnstoff ist.

12. Verfahren nach einem der Ansprüche 10 oder 11, wobei der Metallsalzkatalysator ein Carboxylat eines Metalls der Gruppe IA oder IIA ist.

13. Offenzelliger Polyurethan- oder urethanmodifizierter Polyisocyanurat-Hartschaumstoff, der nach dem Verfahren gemäß einem der Ansprüche 1 bis 12 erhältlich ist.

14. Verwendung einer isocyanatreaktive Zusammensetzung, umfassend eine inerte, unlösliche, fluorierte Verbindung, welche in der isocyanatreaktiven Zusammensetzung eine Löslichkeit von weniger als 500 ppm an Gewicht bei 25°C und Atmosphärendruck zeigt, und weiterhin eine im Infrarotbereich absorbierende Substanz umfassend, welche mindestens 50% der elektromagnetischen Strahlung im Wellenlängenbereich von 2 bis 50 µm (Mikron) absorbiert und darin dispergiert ist, um das Verfahren gemäß Anspruch 1 durchzuführen.

15. Verwendung einer isocyanatreaktive Zusammensetzung nach Anspruch 14, welche des weiteren einen Treitmittelaktivator, der eine isocyanatreaktive cyclische Verbindung der Formel 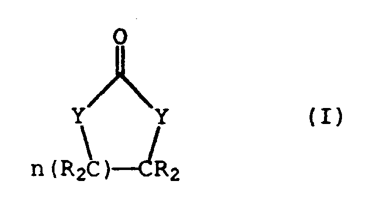 ist,
wobei Y gleich O oder NR² ist, wobei jedes R2 unabhängig ein niederes C₁-C₆-Alkylradikal oder ein mit einer isocyanatreaktiven Gruppe substituiertes niederes Alkylradikal ist;
jedes R unabhängig Wasserstoff, ein niederes C₁-C₆-Alkylradikal oder (CH₂)ₘ-X ist, wobei X eine isocyanatreaktive Gruppe, welche OH oder NH₂ ist, und m gleich 0, 1 oder 2 ist; und
n gleich 1 oder 2 ist;
mit der Maßgabe, daß mindestens eines von R¹ oder R eine isocyanatreaktive Gruppe ist oder umfaßt;
und einen Metallsalzkatalysator umfaßt.

16. Verwendung einer Polyisocyanat-Zusammensetzung, welche eine im Infrarotbereich absorbierende Substanz umfaßt, welche mindestens 50% der elektromagnetischen Strahlung im Wellenlängenbereich von 2 bis 50 µm (Mikron) absorbiert, sowie weiterhin eine inerte, unlösliche, fluorierte Verbindung umfaßt, von weniger als 500 ppm an Gewicht bei 25°C und Atmosphärendruck zeigt, um das Verfahren gemäß Anspruch 1 durchzuführen.

17. Evakuierte Isolationsplatte, umfassend einen Füllstoff und einen gasdichten Behälter, welcher den Füllstoff umhüllt,
**dadurch gekennzeichnet, daß**
der Füllstoff einen offenzelligen Polyurethan- oder urethanmodifizierten Polyisocyanurat-Hartschaumstoff gemäß Anspruch 13 umfaßt.

## Revendications

1. Procédé pour la préparation d'une mousse de polyuréthanne ou de polyisocyanurate à modification uréthanne rigide à cellules ouvertes fines ayant des cellules d'un diamètre moyen inférieur à 150 micromètres, comprenant l'étape de réaction d'un polyisocyanate organique avec une matière polyfonctionnelle réactive avec les isocyanates, caractérisé en ce que la réaction est conduite en présence d'au moins une substance absorbant le rayonnement infrarouge, qui absorbe au moins 50 % du rayonnement électromagnétique dans la plage de longueurs d'ondes de 2 à 50 micromètres, distribuée uniformément dans au moins un des ingrédients de formation de mousse.

2. Procédé suivant la revendication 1, dans lequel la substance absorbant le rayonnement infrarouge consiste en noir de carbone ou dioxyde de titane.

3. Procédé suivant l'une quelconque des revendications précédentes, dans lequel la substance absorbant le rayonnement infrarouge a des particules de forme asymétrique.

4. Procédé suivant l'une quelconque des revendications précédentes, dans lequel le diamètre de particules de la substance absorbant le rayonnement infrarouge est compris dans l'intervalle de 0,01 à 20 micromètres.

5. Procédé suivant l'une quelconque des revendications précédentes, dans lequel la quantité de substance absorbant le rayonnement infrarouge est comprise dans l'intervalle de 0,1 à 5 % en poids sur la base de la composition totale de formation de mousse.

6. Procédé suivant l'une quelconque des revendications précédentes, qui est mis en oeuvre en présence d'un composé fluoré insoluble inerte, présentant une solubilité dans la composition réactive avec les isocyanates ou dans la composition de polyisocyanate inférieure à 500 ppm en poids à 25°C et sous pression atmosphérique.

7. Procédé suivant la revendication 6, dans lequel le composé fluoré insoluble inerte est choisi dans le groupe suivant : hydrocarbures fortement fluorés ou perfluorés, éthers fortement fluorés ou perfluorés, amines tertiaires fortement fluorées ou perfluorées, aminoéthers fortement fluorés ou perfluorés et sulfones fortement fluorées ou perfluorées, l'expression "fortement fluoré" étant destinée à désigner des composés dans lesquels au moins 50 % des atomes d'hydrogène présents dans les composés non fluorés sont remplacés par des atomes de fluor.

8. Procédé suivant la revendication 7, dans lequel le composé fluoré insoluble inerte consiste en perfluoro-n-pentane ou butyltétrahydrofuranne perfluoré.

9. Procédé suivant la revendication 6, 7 ou 8, dans lequel la quantité de composé fluoré insoluble inerte est comprise dans l'intervalle de 0,1 à 5 % en poids sur la base de la composition totale de formation de mousse.

10. Procédé suivant l'une quelconque des revendications 6 à 10, qui est mis en oeuvre en présence d'un activateur d'effet porogène qui est un composé cyclique, réactif avec les isocyanates, de formule 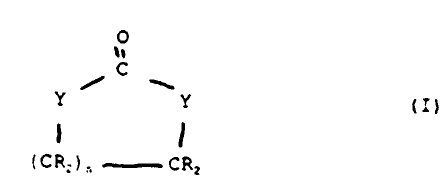 dans laquelle
Y représente O ou un groupe NR¹ dans lequel chaque groupe R¹ représente indépendamment un radical alkyle inférieur en C₁ à C₆ ou un radical alkyle inférieur substitué avec un groupe réactif avec les isocyanates ;
chaque groupe R représente indépendamment l'hydrogène, un radical alkyle inférieur en C₁ à C₆ ou (CH₂)ₘ-X dans lequel X représente un groupe réactif avec les isocyanates qui est un groupe OH ou NH₂ et m est égal à 0, 1 ou 2 ; et
n est égal à 1 ou 2 ;
sous réserve qu'au moins un des groupes R¹ ou R soit ou comprenne un groupe réactif avec les isocyanates ;
et en présence d'un catalyseur consistant en un sel métallique.

11. Procédé suivant la revendication 10, dans lequel le composé de formule (I) est un carbonate cyclique réactif avec les isocyanates ou une urée cyclique réactive avec les isocyanates.

12. Procédé suivant l'une quelconque des revendications 10 et 11, dans lequel le catalyseur consistant en un sel métallique est un carboxylate de métal du groupe Ia ou du groupe IIa.

13. Mousse de polyuréthanne ou de polyisocyanurate à modification uréthanne rigide à cellules ouvertes pouvant être obtenue par le procédé répondant à la définition suivant les revendications 1 à 12.

14. Utilisation d'une composition réactive avec les isocyanates, comprenant un composé fluoré insoluble inerte présentant une solubilité dans la composition réactive avec les isocyanates inférieure à 500 ppm en poids à 25°C et sous la pression atmosphérique et comprenant en outre une substance absorbant le rayonnement infrarouge, qui absorbe au moins 50 % du rayonnement électromagnétique dans la plage de longueurs d'ondes de 2 à 50 micromètres, dispersée dans cette composition, pour la mise en oeuvre du procédé suivant la revendication 1.

15. Utilisation d'une composition réactive avec les isocyanates suivant la revendication 14, comprenant en outre un activateur d'effet porogène qui est un composé cyclique, réactif avec les isocyanates, de formule 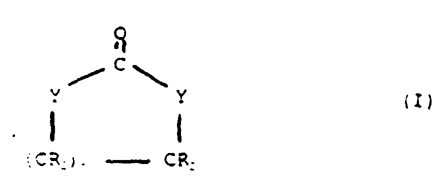 dans laquelle
Y représente O ou un groupe NR¹ dans lequel chaque groupe R¹ représente indépendamment un radical alkyle inférieur en C₁ à C₆ ou un radical alkyle inférieur substitué avec un groupe réactif avec les isocyanates ;
chaque groupe R représente indépendamment l'hydrogène, un radical alkyle inférieur en C₁ à C₆ ou (CH₂)ₘ-X dans lequel X représente un groupe réactif avec les isocyanates qui est un groupe OH ou NH₂ et m est égal à 0, 1 ou 2 ; et
n est égal à 1 ou 2 ;
sous réserve qu'au moins un des groupes R¹ ou R soit ou comprenne un groupe réactif avec les isocyanates ;
et un catalyseur consistant en un sel métallique.

16. Utilisation d'une composition de polyisocyanates comprenant une substance absorbant le rayonnement infrarouge, qui absorbe au moins 50 % du rayonnement électromagnétique dans la plage de longueurs d'ondes de 2 à 50 micromètres et comprenant en outre une substance fluorée insoluble et inerte présentant une solubilité dans la composition de polyisocyanates inférieure à 500 ppm en poids à 25°C et sous la pression atmosphérique, pour la mise en oeuvre du procédé suivant la revendication 1.

17. Panneau isolant mis sous vide, comprenant une matière de remplissage et un récipient étanche aux gaz enveloppant ladite matière de remplissage, caractérisé en ce que la matière de remplissage comprend une mousse de polyuréthanne ou de polyisocyanurate à modification uréthanne rigide à cellules ouvertes répondant à la définition suivant la revendication 13.
